# EUROPEAN PATENT APPLICATION

(11) **EP 3 910 518 A1**
(43) Date of publication of application: **17.11.2021**
(21) Application number: 20174400.0
(22) Date of filing: 13.05.2020
(51) Int. Cl.: G06F 30/12, G06F 3/01, G06T 19/00, G06K 9/00, G06F 111/12

(54) **AUGMENTING A SCHEMATIC REPRESENTATION OF A TECHNICAL INFRASTRUCTURE**

(71) Applicant: Siemens Aktiengesellschaft, 80333 München (DE)
(72) Inventor: Dr. MACWILLIAMS, Asa, 82256 Fürstenfeldbruck (DE); Dr. LABISCH, Daniel, 76149 Karlsruhe (DE); DE NUL, Gert, 9300 Aalst (BE); GONZALO, Andoni, 48640 Berango (ES); SUDHARSAN, Nischita, 82031 Grünwald (DE)

(57) **Abstract**

The disclosure relates to a method for augmenting a schematic representation (4) of a technical infrastructure (1), the method including the steps of:
- Loading a first data set (S1) representing the schematic representation (4) of the technical infrastructure (1),
- acquiring a second data set (S2) representing a three-dimensional structure of the technical infrastructure (1),
- identifying at least one second data item (S3) of the second data set by locating an area in the three-dimensional structure of the technical infrastructure, the at least one second data item representing at least one technical component (2) of the technical infrastructure,
- determining, using a matching algorithm, at least one first data item (S4) in the first data set, the at least one first data item corresponding to the at least one second data item,
- determining at least one functional topology (S5) in the schematic representation (4), the at least one functional topology assigned to the at least one first data item, and
- augmenting, in the schematic representation, the at least one functional topology (S6).

## Description

### Field of the Invention

The embodiments disclosed herein relate to a method for augmenting a schematic representation of a technical infrastructure, a computer program product and a computer-readable storage medium.

### Background of the Invention

The present practice of inspecting a plant includes a schematic diagram, which serves a user who wishes information about a technical component of a physical technical infrastructure/the plant, e.g. the user wishes to understand the context (e.g. in a piping and instrumentation (P&ID) diagram) of the technical component e.g. in front of them.

### Summary

Accordingly, there is a need to make schematic diagrams more intuitive and help a user e.g. to find a specific component e.g. the one in front of them on an existing 2D schematic diagram

Embodiments herein generally relate to a method for augmenting a schematic representation of a technical infrastructure.

In one embodiment, the method includes the steps of:
- Loading a first data set representing the schematic representation of the technical infrastructure,
- acquiring a second data set representing a three-dimensional structure of the technical infrastructure,
- identifying at least one second data item of the second data set by locating an area in the three-dimensional structure of the technical infrastructure, the at least one second data item representing at least one technical component of the technical infrastructure,
- determining, using a matching algorithm, at least one first data item in the first data set, the at least one first data item corresponding to the at least one second data item,
- determining at least one functional topology in the schematic representation, the at least one functional topology assigned to the at least one first data item, and
- augmenting, in the schematic representation, the at least one functional topology.

According to the embodiments a functional topology is augmented in a schematic representation of a technical infrastructure, wherein the functional topology is determined by matching second data items of a three-dimensional structure of the technical infrastructure to first data items of the schematic representation.

Locating an area in the three-dimensional structure of the technical infrastructure advantageously includes analysing the three-dimensional structure of the technical infrastructure and searching, recognizing, and locating instanc-es/objects like identifiers, e.g. by using image analysis methods.

The method has the advantage that augmenting the at least one functional topology in the schematic representation is a new type of visualization which is very intuitive and makes use of existing schematic representations, e.g. diagrams that users may be familiar with.

The method takes advantage of the projective properties, like local continuity and locally low distance distortion, of schematic representations, e.g. 2D schematic diagrams to create smooth movements in 2D space (schematic representations).

A further advantage of the method is that by supporting rapid feedback between 3D-movement (e.g. the movement of a user in a real-world technical infrastructure or a virtual technical infrastructure) and 2D schematic representations / visualiza-tions, it takes advantage of the link between users' visual and kinesthetic senses, facilitating learning and understanding.

A further advantage of the method is that it can easily be implanted using today's augmented reality and virtual reality hardware, and existing 2D and 3D maps.

According to a further embodiment using the matching algorithm includes the steps of:
- Determining at least one second identifier of the at least one second data item,
- matching the at least one second identifier to at least one first identifier of the at least one first data item, and
- outputting the at least one first data item.

The matching algorithm matches a given position (or set of positions) of the at least one second data item from the three-dimensional structure to a corresponding position (or set of positions) of the at least on first data item on the schematic representation of the technical infrastructure. This has the advantage that for given second data items corresponding first data items are determined.

The use of the first identifier and the second identifier has the advantage that corresponding first data items and second data items can be clearly identified.

According to a further embodiment the matching algorithm applies a string-matching operation, an identifier-matching operation, and/or a distance function. This is of particular advantage if the second identifier and first identifier are slightly different (e.g. YS1 02004 vs. Y02004). An appropriate string-matching algorithm may be used and match the first identifier and the second identifier, e.g. using a distance function or a lookup table based on some database.

According to a further embodiment augmenting the at least one functional topology includes the steps of:
- Computing an aggregate position in the schematic representation, the aggregate position assigned to the at least one first data item and
- displaying an augmentation depending on the aggregate position.

The aggregate position is computed of the at least one first data item. The aggregate position can be displayed e.g. as a bounding box, a weighted average, an ellipsoid, or a group of individual highlights.

According to a further embodiment the augmentation comprises an ellipsoid, a group of individual highlights and/or a bounding box, and/or a superimposed object. The superimposed object can be one or multiple navigation arrows, lines, circles, stars, text, numbers and/or a navigation route.

According to a further embodiment the aggregate position is a weighted aggregate position. This is of particular advantage if the at least one second data item includes more than one second data item. A weighted aggregate position in the schematic representation can be calculated, the aggregate position assigned to the at least one first data item.

The weighted aggregate position can be used for displaying an augmentation on the schematic representation at the at least one functional topology depending on the aggregate position. The weighted aggregate position can be displayed e.g. as a bounding box, a weighted average, an ellipsoid, or a group of weighted individual highlights.

According to a further embodiment the schematic representation is a diagram, a schematic map, a container for two-dimensional information, a container for three-dimensional information, a bitmap and/or a vector image. This has the advantage that the method can takes advantage of the link between users' visual and kinesthetic senses, facilitating learning and understanding.

According to a further embodiment the three-dimensional structure is a real-world representation of the technical infrastructure or a virtual representation of the technical infrastructure. This has the advantage that the method can easily be implanted using today's augmented reality and virtual reality hardware, and existing 2D and 3D maps.

According to a further embodiment the technical infrastructure is a chemical plant, a production plant, an industrial plant, an energy plant, a logistics facility, a warehouse, traffic infrastructure, and/or a factory environment. This has the advantage that the method can be used in different technical environments.

According to a further embodiment a weighted average of the at least one second data item is computed. This is of particular advantage if the at least one second data item includes more than one second data item. For example, all technical components that are within a viewing frustum of a camera, and between 10 cm and 2 m distance could be included in the calculation of the weighted average; and a weight based on how close the technical components are to the centre of the frustum, or how easily visible it is could be assigned. The result might be 70% Y02004 (second identifier a) and 30% Y02003 (second identifier b).

According to a further embodiment results of the matching algorithm comprise a confidence value and/or a relevance value. This is of particular advantage if the at least one second data item includes more than one second data item.

There may be more than one first identifier corresponding to a given second identifier. There may be second identifiers that match with a certain probability; for example, the first identifier YS1 0200x could match the second identifier Y02004 and Y02003 equally well. In such cases, the matching algorithm may result in a confidence or relevance value representing the first data item.

The confidence or relevance value can be included in a weighting algorithm. This is of particular advantage if the at least one second data item includes more than one second data item.

According to a further embodiment the second data set is acquired by a technical device. The technical device being a smartphone, a tablet, a device comprising an augmented reality software, a device comprising a virtual reality software, an augmented reality headset, a virtual reality headset, a computer comprising an augmented reality software, and/or a computer comprising a virtual reality software. This has the advantage that the second data set can be acquired by different technical devices.

According to a further embodiment the second data set includes positional data representing a position within the technical infrastructure, image data of the technical infrastructure, image data of the at least one technical component, and/or an identifier of the at least one technical component.

According to a further embodiment a computer program product comprising instructions which, when the program is executed by a computational device, cause the computational device to carry out the claimed method is provided.

According to a further embodiment a computer-readable storage medium comprising instructions which, when executed by a computational device, cause the computational device to carry out the claimed method is provided.

The method can be combined with a visual modification of existing 2D maps for display on augmented reality devices. For example, a black-on-white 2D line diagram can be converted to a bright-blue-on-transparent diagram with thicker lines, and larger fonts.

Advantageous embodiments can easily be used to show multiple 2D schematic maps, either at the same time or alternatingly. Advantageous embodiments can also be extended to show the correspondences between different 2D maps.

There are different ways of pre-processing the 2D map to create a list of 2D component coordinates and identifiers. For example, if the map is generated from a database, the same database can be used to generate the coordinates. If the map is a vector graphics format (e.g. a PDF or SVG document), a parser can extract text labels and their positions within the document. If the map is a pre-existing raster image, e.g. a scan of a paper document, an OCR algorithm can find 2D map identifiers and their positions on the 2D map.

An advantage embodiment for AR devices works without any pre-existing 3D map, but simply uses and OCR algorithm to detect text labels in the camera image and uses those labels to search for identifiers within the existing 2D map.

Since the method computes the functional topology and the aggregate position in the schematic representation based on weighted averages and confidence values, when the user moves smoothly in the technical infrastructure, the aggregate position on the schematic representation will move mostly smoothly in 2D space as well.

Why "smooth"? This is because the projection of the three-dimensional structure (3D space) onto the schematic representation (2D space) generally designed to be locally continuous. This means that, within certain areas of the map, components that are close together in 3D space are also close together in 2D space, and vice versa.

Why "mostly"? The projection of the three-dimensional structure (3D space) onto the schematic representation (2D space) is very likely to be globally discontinuous, and not distance-preserving everywhere, since it is not simply a perspective projection. Thus, within certain areas of the schematic representation (2D space), e.g. technical components 2 that are close together in the three-dimensional structure (3D space) are actually very far apart on the schematic representation (2D space), and vice versa. In those areas, a smooth movement in 3D will cause a jump in 2D.

### Brief Description of the Drawings

- Fig. 1: shows a flow diagram of the claimed method and
- Fig. 2: shows a technical infrastructure with a corre-sponding augmented schematic representation.

### Detailed Description of the Drawing

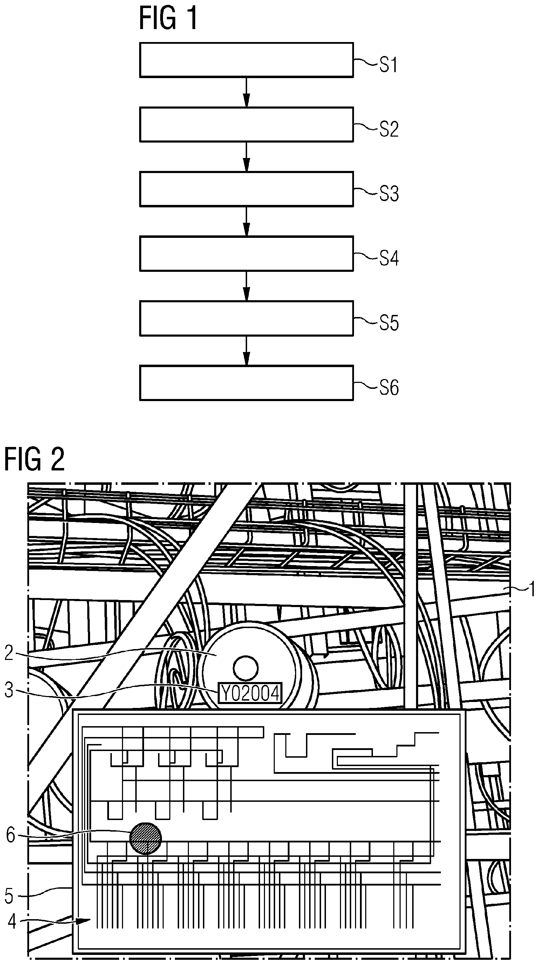

Fig. 1 shows a flow diagram of the method for augmenting a schematic representation of a technical infrastructure comprising at least one technical component. The method including the steps of:
- Step S1: Loading a first data set representing the schematic representation 4, (shown in Fig. 2) of the technical infrastructure 1 (shown in Fig. 2),
- Step S2: Acquiring a second data set representing a three-dimensional structure of the technical infrastructure 1,
- Step S3: identifying at least one second data item of the second data set by locating an area in the three-dimensional structure of the technical infrastructure, the at least one second data item representing at least one technical component 2 (shown in Fig. 2) of the technical infrastructure,
- Step S4: determining, using a matching algorithm, at least one first data item in the first data set, the at least one first data item corresponding to the at least one second data item,
- Step S5: determining at least one functional topology in the schematic representation 4, the at least one functional topology assigned to the at least one first data item, and
- Step S6: augmenting, in the schematic representation, the at least one functional topology.

An example for conducting Step S2 (Acquiring a second data set representing a three-dimensional structure of the technical infrastructure 1) is a user starting at an arbitrary position in a real-world or virtual technical infrastructure 1 and pointing an technical device (e.g. with an augmented reality software) at a technical component 2 or flying to a particular part of the technical infrastructure 1 in a virtual reality application.

The technical infrastructure 1 can be a chemical plant, a production plant, an industrial plant, an energy plant, a logistics facility, a warehouse, traffic infrastructure, and/or a factory environment.

An example for conducting Step S6 (Augmenting, in the schematic representation, the at least one functional topology) is that a schematic representation 4, e.g. an existing schematic map or diagram, with an augmentation/focus on that functional topology/part of the schematic representation 4 that corresponds (most closely) to the nearby technical components 2. This can be shown, for example, as a close-up, or as a highlight on a larger scale schematic representation 4.

Fig. 2 shows a technical infrastructure 1 with a technical component 2, a second identifier 3 on the technical component 2, and a first data set representing a schematic representation 4 of a technical infrastructure 1.

An exemplary embodiment is a user pointing a camera of a technical device 5, e.g. an augmented reality device or a tablet, at a technical component 2 labelled with the second identifier 3 "Y02004". By pointing the camera of technical device 5, a second data set representing a three-dimensional structure of the technical infrastructure 1 is acquired.

The second identifier 3 "Y02004" makes the technical component 2 and a at least one second data item of the second data set clearly identifiable by locating an area in the three-dimensional structure of the technical infrastructure 1.

Locating an area in the three-dimensional structure of the technical infrastructure advantageously includes analysing the three-dimensional structure of the technical infrastructure and searching, recognizing, and locating instanc-es/objects like identifiers, e.g. by using image analysis methods.

A first data set representing a schematic representation 4, e.g. a schematic map or a diagram, of the technical infrastructure 1 is loaded.

At least one first data item in the first data set is determined using a matching algorithm, the at least one first data item corresponding to the at least one second data item. This is executed by matching the at least one second data item in the first data set, e.g. the schematic representation 4, using a at least one second identifier (the second identifier Y02004 in Fig. 2) of the at least one second data item and a at least one first identifier of the first data item. There may be more than one first identifier corresponding to a given second identifier.

For this, the matching algorithm may have to match first identifiers to second identifier (Y02004). The second identifiers and first identifiers may be slightly different (e.g. YS1 02004 vs. Y02004), so an appropriate string-matching algorithm may be used, e.g. using a distance function or a lookup table based on some database.

At least one functional topology in the schematic representation 4 is determined, the at least one functional topology is assigned to the at least one first data item.

The technical device 5 displays the schematic representation 4 of the technical infrastructure 1 with the area/functional topology of the technical component 2 labelled with the second identifier 3 "Y02004" highlighted/augmented.

Augmenting the at least one functional topology includes the steps of computing an aggregate position in the schematic representation 4, the aggregate position assigned to the at least one first data item and displaying an augmentation 6 depending on the aggregate position.

The aggregate position is computed of the at least one first data item. The aggregate position can be displayed e.g. as a bounding box, a weighted average, an ellipsoid, or a group of individual highlights.

In Fig. 2 a piping and instrumentation (P&ID) diagram, with a highlight/augmentation 6 over the area/functional topology that corresponds to the technical component 2 labelled with the second identifier 3 "Y02004" in view is shown.

A further exemplary embodiment is a user pointing a camera of a technical device 5, e.g. an augmented reality device or a tablet, at more than one technical component 2 of the technical infrastructure 1.

A weighted average of the more than one technical component 2 / of more than one second data item 2 within the three-dimensional structure of the technical infrastructure 1 is computed. For example, all technical components 2 that are within a viewing frustum of a camera, and between 10 cm and 2 m distance could be included in the calculation of the weighted average; and a weight based on how close the technical component 2 is to the centre of the frustum, or how easily visible it is could be assigned. The result might be 70% Y02004 (second identifier a) and 30% Y02003 (second identifier b).

A first data set representing a schematic representation 4 of the technical infrastructure 1 is loaded.

The second identifiers 3, e.g. "Y02004" and "Y02003" make the technical components 2 and for each second identifier 3 an at least one second data item of the second data set clearly identifiable by locating an area in the three-dimensional structure of the technical infrastructure 1.

At least one first data item in the first data set is determined using a matching algorithm, the at least one first data item corresponding to the at least one second data item of each second identifier 3. This is executed by matching the at least one second data item/ the second identifier 3 in the first data set e.g. the schematic representation 4 using at least one second identifier of the at least one second data item and a at least one first identifier of the first data item.

For this, the matching algorithm may have to match first identifiers (e.g. YS1 02004) to second identifier (e.g. Y02004). The second identifiers and first identifiers may be slightly different (e.g. YS1 02004 vs. Y02004), so an appropriate string-matching algorithm may be used, e.g. using a distance function. Or, a lookup table is used based on some database. By this at least one first data item is determined.

There may be more than one first identifier corresponding to a given second identifier. There may be second identifiers that match with a certain probability; for example, the first identifier YS1 0200x could match the second identifier Y02004 and Y02003 equally well. The matching algorithm may result in a confidence or relevance value representing the first data item. The confidence or relevance value can be included in a weighting algorithm. A weighted aggregate position in the schematic representation 4 can be calculated, the aggregate position assigned to the at least one first data item.

The weighted aggregate position can be used for displaying an augmentation 6 on the schematic representation 4 at at least one functional topology depending on the aggregate position. The weighted aggregate position can be displayed e.g. as a bounding box, a weighted average, an ellipsoid, or a group of weighted individual highlights.

At least one functional topology in the schematic representation 4 is determined, the at least one functional topology assigned to the at least one first data item.

Although the invention has been explained in relation to its advantageous embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1: technical infrastructure
- 2: technical components
- 3: second identifier
- 4: schematic representation
- 5: technical device
- 6: augmentation

- S1: Loading a first data set
- S2: Acquiring a second data set
- S3: Identifying at least one second data item
- S4: determining at least one first data item
- S5: determining at least one functional topology
- S6: augmenting the at least one functional topology

## Claims

1. A method for augmenting a schematic representation (4) of a technical infrastructure (1), the method including the steps of:
- Loading a first data set (S1) representing the schematic representation (4) of the technical infrastructure (1),
- acquiring a second data set (S2) representing a three-dimensional structure of the technical infrastructure (1),
- identifying at least one second data item (S3) of the second data set by locating an area in the three-dimensional structure of the technical infrastructure, the at least one second data item representing at least one technical component (2) of the technical infrastructure (1),
- determining, using a matching algorithm, at least one first data item (S4) in the first data set, the at least one first data item corresponding to the at least one second data item,
- determining at least one functional topology (S5) in the schematic representation (4), the at least one functional topology assigned to the at least one first data item, and
- augmenting, in the schematic representation, the at least one functional topology (S6).

2. Method according to claim 1,
wherein using the matching algorithm includes the steps of:
- Determining at least one second identifier (3) of the at least one second data item,
- matching the at least one second identifier (3) to at least one first identifier (6) of the at least one first data item, and
- outputting the at least one first data item.

3. Method according to one of the previous claims,
the matching algorithm applying a string-matching operation, an identifier-matching operation, and/or a distance function.

4. Method according to one of the previous claims,
wherein augmenting the at least one functional topology includes the steps of:
- Computing an aggregate position in the schematic representation (4), the aggregate position assigned to the at least one first data item and
- displaying an augmentation (6) depending on the aggregate position.

5. Method according to claim 4,
wherein the augmentation (6) comprises an ellipsoid, a group of individual highlights and/or a bounding box, and/or a superimposed object.

6. Method according to claim 4 or claim 5,
wherein the aggregate position is a weighted aggregate position.

7. Method according to one of the previous claims,
wherein the schematic representation (4) is a diagram, a schematic map, a container for two-dimensional information, a container for three-dimensional information, a bitmap and/or a vector image.

8. Method according to one of the previous claims,
wherein the three-dimensional structure is a real-world representation of the technical infrastructure (1) or a virtual representation of the technical infrastructure (1).

9. Method according to one of the previous claims,
wherein the technical infrastructure (1) is a chemical plant, a production plant, an industrial plant, an energy plant, a logistics facility, a warehouse, traffic infrastructure, and/or a factory environment.

10. Method according to one of the previous claims,
wherein a weighted average of the at least one second data item is computed.

11. Method according to one of the previous claims,
wherein results of the matching algorithm comprise a confidence value and/or a relevance value.

12. Method according to one of the previous claims,
wherein the second data set is acquired by a technical device (5), the technical device (5) being:
- a smartphone,
- a tablet,
- a device comprising an augmented reality software,
- a device comprising a virtual reality software,
- an augmented reality headset,
- a virtual reality headset,
- a computer comprising an augmented reality software, and/or
- a computer comprising a virtual reality software.

13. Method according to one of the previous claims,
wherein the second data set includes:
- Positional data representing a position within the technical infrastructure (1),
- image data of the technical infrastructure (1),
- image data of the at least one technical component (2), and/or
- an identifier of the at least one technical component (2) .

14. Computer program product comprising instructions which, when the program is executed by a computational device, cause the computational device to carry out a method according to one of the claims 1 to 13.

15. Computer-readable storage medium comprising instructions which, when executed by a computational device, cause the computational device to carry out a method according to one of the claims 1 to 13.
